(19) Europäisches Patentamt
European Patent Office
Office européen des brevets

(11) Numéro de publication: **0 092 475**
**B2**

(12) **NOUVEAU FASCICULE DE BREVET EUROPEEN**

(45) Date de publication du nouveau fascicule du brevet: **14.03.90**

(51) Int. Cl.[5]: **C 04 B 35/00,** C 04 B 35/51, G 21 C 3/62, C 01 G 43/01

(21) Numéro de dépôt: **83400743.7**

(22) Date de dépôt: **14.04.83**

(54) **Procédé de traitement d'une poudre d'oxyde métallique et utilisation de la poudre traitée pour la fabrication de pastilles de combustible nucléaire.**

(30) Priorité: **19.04.82 FR 8206677**

(43) Date de publication de la demande: **26.10.83 Bulletin 83/43**

(45) Mention de la délivrance du brevet: **24.07.85 Bulletin 85/30**

(45) Mention de la decision concernant l'opposition: **14.03.90 Bulletin 90/11**

(84) Etats contractants désignés: **BE CH DE FR GB IT LI SE**

(56) Documents cités:
**FR-A-1 262 141**
**US-A-4 138 360**

**CHEMICAL ABSTRACTS, vol. 55, no. 19, 18 septembre 1961, colonnes 19541i-19542a, Columbus, Ohio, USA A.J. CAPUTO et al.: "Production, precision forming, and sintering of ceramic-grade UO2"**

**Rapport CEA-R-5185**
**"Nouveau traité de chimie minérale", page 569, Edition MASSON - 1967**

(73) Titulaire: **COMMISSARIAT A L'ENERGIE ATOMIQUE**
**31/33, rue de la Fédération**
**F-75015 Paris (FR)**

(72) Inventeur: **Braun, Camille**
**Impasse Le Goulet**
**F-38250 Saint-Nizier du Moucherotte (FR)**
Inventeur: **Danroc, Joel**
**23, Avenue Malherbe**
**F-38100 Grenoble (FR)**
Inventeur: **Francois, Bernard**
**61, Le Hameau Fleuri**
**F-38330 Montbonnot (FR)**
Inventeur: **Michel, Jean**
**5, Chemin de la Moidieu**
**F-38330 Biviers (FR)**

(74) Mandataire: **Mongrédien, André et al**
**c/o BREVATOME 25, rue de Ponthieu**
**F-75008 Paris (FR)**

**EP 0 092 475 B2**

Courier Press, Leamington Spa, England.

**Description**

La présente invention a pour objet un procédé de frittage d'une poudre ou de granulés d'oxyde métallique comportant une étape préalable de traitement de la poudre ou des granulés qui permet d'améliorer leur aptitude au compactage et au frittage.

De façon plus précise, elle concerne le frittage d'oxydes métalliques capables de présenter plusieurs états de valence et de donner lieu à la formation d'oxydes hydratés.

De tels oxydes peuvent être constitués en particulier par le bioxyde d'uranium, le bioxyde de plutonium employés purs ou en mélange, ou bien encore en mélange avec le bioxyde de thorium, c'est-à-dire par des oxydes utilisables pour la fabrication de pastilles de combustible nucléaire pouvant également contenir des absorbants neutroniques temporaires tels que $Gd_2O_3$, $Eu_2O_3$, etc.

L'un des procédés habituels pour réaliser des pastilles de combustible nucléaire à partir de poudres de ces oxydes consiste à mettre la poudre sous la forme de pastilles par compression à froid et à soumettre ensuite les pastilles crues ainsi obtenues à un frittage naturel à une température appropriée. Après frittage, ou soumet les pastilles frittées tout d'abord à un traitement de rectification pour qu'elles présentent les caractéristiques géométriques requises, puis à des opération de contrôle permettant de vérifier si elles sont conformes ou non aux spécifications.

La réalisation de ces différentes étapes implique de nombreuses manipulations plus ou moins automatisées des pastilles à l'état cru et à l'état fritté, ce qui pose certains problèmes en raison de la fragilité des pastilles aussi bien à l'état cru qu'à l'état fritté. En effet, les pastilles sont sensibles aux chocs intervenant pendant les transferts et manipulations, en particulier sur leurs arêtes vives lorsqu'elles sont à l'étrat cru. Ces chocs induisent des défauts ou des éclatements de matière qui ne sont pas guéris par le traitement de frittage et par exemple, dans certains cas, 15% environ des pastilles frittées présentent des éclats superficiels de 1 à 4 $mm^2$, principalement sur leurs arêtes.

De ce fait, lors du contrôle final, certaines de ces pastilles sont jugées inacceptables et elles sont mises au rebut. Elles peuvant être transformées en poudre, celle-ci peut alors être recyclée après un traitement approprié, mais ce recyclage exige des opérations complémentaires et il entraîne une baisse légère de la qualité des pastilles obtenues à partir de poudre recyclée.

Aussi, il serait souhaitable d'améliorer la tenue mécanique des pastilles crues, en particulier leur solidité et leur résistance aux chocs, etc., car celes-ci exercen une influence très nette sur la qualité du produit fini et sur le rendement de fabrication. En effet, les défauts superficiels qui sont pour l'essentiel engendrés au moment de la fabrication de la pastille crue peuvent être aggravés par les manipulations et opérations ultérieures telle que la rectification des pastille frittées.

Pour améliorer la tenue mécanique des pastilles crues, on a ajouté à la poudre d'oxyde une faible proportion de liant organique, par exemple de l'alcool polyvinylique, ce qui permet d'augmenter la résistance à la traction des pastilles crues de 0,3 à environ 0,6 $MNm^{-2}$ et d'entraîner une diminution très nette du nombre de pastilles présentant des éclats superficiels, ce nombre ne représentant plus que 8% de pastilles fabriquées. Cependant, la nécessité d'utiliser un liant présente certains inconvénients, car il faut ajouter le liant en solution aqueuse et l'éliminer lors du préfrittage, ce qui laisse des résidus carbonés solides qui peuvent nuire au bon frittage des pastilles.

On a aussi envisagé de faire subir à la poudre d'oxyde de départ un trautement qui consiste à comprimer la poudre à froid pour obtenir des comprimés, puis à concasser les comprimés pour obtenir des granulés et à ajoûter aux granulés environ 3% de liant organique avant de les comprimer à froid pour obtenir des pastilles crues de meillure qualité.

Cependant, ce procédé presente, lui aussi, l'inconvénient de nécessiter, d'une part, l'adjonction de liant organique que l'on doit éliminer ensuite lors du frittage et, d'autre part, la mise en oeuvre d'étapes complémentaires de compression et concassage.

La présente invention a précisément pour objet un procédé de frittage d'une poudre d'oxyde métallique, qui comporte une étape préalable de traitement de la poudre permettant en particulier d'améliorer d'un facteur d'environ 1,5 à 3 la résistance à la traction des pastilles crues obtenues par compression à froid de la poudre ainsi traitée. Ce procédé de frittage d'une poudre d'oxyde métallique se caractérise en ce que ladite poudre est préalablement oxydée pour former sur la surface des particules de poudre une couche d'oxyde hydraté du nême métal.

Comme on l'a vu précédemment, l'oxyde métallique susceptible d'être soumis à un tel frittage est un oxyde métallique capable de présenter plusieurs états de valence et de donner lieu à la formation d'une couche adhérente d'oxyde hydrate.

A titre d'exemple de tels oxydes, on peut citer ceux d'uranium, de plutonium, de fer, de vanadium, de molybdène, de niobium, de cérium; de cuivre et de cobalt.

Avantageusement, l'oxyde métallique est le bioxyde d'uranium, le bioxyde de plutonium, ou un oxyde mixte $UO_2$—$PuO_2$, $UO_2$—$ThO_2$ ou $PuO_2$—$ThO_2$. Le Procédé s'applique également à des oxydes combustibles nucléaires contenant des absorbant neutroniques temporaires, ($Gd_2O_3$, $Eu_2O_3$), soit à des oxydes mixtes tels que $UO_2$—$Gd_2O_3$, $UO_2$—$PuO_2$—$Eu_2O_3$ et $UO_2$—$PuO_2$—$Gd_2O_3$.

Dans le cas du bioxyde d'uranium $UO_2$, l'hydratation conduit à l'oxyde hydraté répondant à la

formule $[UO_2(OH)_2]$, $H_2O$, soit à la formule globale simplifiée $UO_3$, $2H_2O$.

La présence selon l'invention, d'une couche superficielle adhérente d'oxyde hydrate améliore énormément le comportement de la poudre pendant sa transformation par compression en pastilles crues. En effet, la poudre traitée transmet mieux la pression et de ce fait la distribution de densité au sein des pastilles est plus homogène et les pastilles se déforment moins pendant le frittage; cela permet l'obtention de pastilles frittées plus proches de l'état cylindrique et minimise et simplifie de ce fait les opérations de rectification pour ajuster, après frittage, les dimensions des pastilles obtenues. De même, on obtient une meilleure cohésion de la poudre dans les pastilles crues. Ces résultats sont dus à la présence de la molécule d'eau associée à l'oxyde formant la couche superficielle d'oxyde hydraté.

Par ailleurs, l'augmentation de volume associcée à la décompression et au démoulage des pastilles crues est plus faible; de ce fait, les défauts, les fissurations, le feuilletage et la destruction, des pastilles qui interviennent parfois lors de l'opération de démoulage sont beaucoup moins fréquents.

En effet, dans les installations industrielles de fabrication de pastilles, les cadences sont très rapides. A titre d'exemple, la séquence complète: remplissage du moule, compression, décompression et démoulage, peut être effectuée en moins de 6 s, et les opérations de décompression et de démoulage ne durant alors chacune qu'environ 0,5 s. De ce fait, lors de la décompression où les contraintes sont libérées très rapidement, la variation de volume peut être importante et conduire à une destruction partielle ou totale de la pastille crue. Grâce au traitement de la poudre de départ par la procédé de l'invention, on minimise les phénomènes dus à la libération des contraintes.

De plus, les pastilles crues préparées à partir de poudres oxydohydratées superficiellement sont moins fragiles et moins sensibles aux chocs, et leur résistance à la traction qui constitue un repère de leur qualité est plus élévee, par exemple augmentée d'un facteur d'environ 2 par rapport aux pastilles crues obtenues à partir de poudre non traitée et supérieure à 30% par rapport aux pastilles crues obtenues à partir de granulés ayant reçu ayant une addition de 3% de liant organique.

Enfin, l'emploi d'une poudre d'oxyde métallique soumise à un traitement d'hydratation, ou mieux d'oxydohydratation superficielle, permet d'utiliser lors de l'opération de compression à froid une quantité moindre de lubrifiant tel que le stéarate de zinc, par exemple 0,1% au lieu de 0,3% dans les procédés antérieurs, et de diminuer ainsi l'encrassement des fours de frittage.

Selon l'invention, on peut réaliser l'oxydohydratation en traitant la poudre d'oxyde métallique dans une atmosphère d'air humide, pendant une durée suffisante pour former ladite couche d'oxyde hydraté.

De préférence, on rélise ce traitement à une température supérieure à la température ambiante, mais au plus égale à 90°C lorsque la poudre d'oxyde est une poudre de bioxyde d'uranium, car le composé hydraté qui répond dans ce cas à la formule $[UO_2(OH)_2]$, $H_2O$ se décompose à une température supérieure à 90°C. Lorsque le traitement d'oxydohydratation est réalisé à une température supérieure à la température ambiante, une durée d'au moins 10 d est nécessaire pour obtenir la couche superficielle d'oxyde hydraté. Dans le cas d'une poudre de $UO_2$, cette durée est d'environ 10 d, si l'on opèra à 80°C avec de l'air à 80% d'humidité, et d'environ 15 d à 60°C avec de l'air à 80% d'humidité.

On remarque ainsi que la durée de ce traitement est trop longue pour une fabrication industrielle où la production journalière moyenne peut être voisine de 1 t, car cela nécessiterait alors des surfaces de stockage beaucoup trop importantes, d'environ 1500 $m^2$, et conduirait au moins au doublement de la durée du cycle de transformation de la poudre d'oxyde en produit fini.

Aussi, selon l'invention, on réalise de préférence l'oxydohydratation en traitant la poudre par un agent oxydent tel que le peroxyde d'hydrogène ou l'ozone, en présence d'eau ou de vapeur d'eau.

Lorsque l'agent oxydant est le peroxyde d'hydrogène, on réalise de préférence le traitement en utilisant une solution aqueuse de peroxyde d'hydrogène, et on mélange la poudre avec cette solution aqueuse puis on soumet ensuite la poudre ainsi traitée à un séchage pour éliminer l'excès d'eau.

L'emploi d'une solution de peroxyde d'hydrogène présente l'advantage de ne conduire à aucune pollution de la poudre d'oxyde métallique et de ne créer par ailleurs aucune complication lors du frittage ultérieur. En effet, cette solution ne contient que les duex constituants indispensibles à la formation de la couche d'oxyde hydraté.

Généralement, on mélange la solution de peroxyde d'hydrogène à la poudre en pulvérisant cette solution sur un lit de poudre en mouvement.

La concentration en peroxyde d'hydrogène de la solution est avantageusement de 4 à 30%. Pour des solutions concentrées (30% $O_2H_2$), on forme aussi une couche $UO_4$, $xOH_2$ avec $x=2$ à 4 qui donne de bons résultats et qui peut se redécomposer en $UO_3$, $2OH_2$. La solution de peroxyde d'hydrogène à 30% n'est pas une limite supérieure et une concentration plus élevée peut être envisagée. On ajoute de préférence la solution de peroxyde d'hydrogène en quantité telle qu'elle représente 2 à 15% du poids de la poudre d'oxyde métallique à traiter. Une quantité supérieure à 15%, bien qu'envisageable, n'est pas à conseiller car elle conduit à des produits trop humides.

Après pulvérisation de la solution de peroxyde d'hydrogène, on assure l'élimination de l'eau libre en excès, qui n'a pas participé à la formation de l'oxyde hydraté, en soumettant la poudre traitée à un séchage effectué, soit à la température ambiante, soit à une température supérieure

qui est au plus de 90°C lorsque la poudre traitée est du bioxyde d'uranium.

La présence d'eau libre ne joue en effet aucun rôle favorable pendant les étapes suivants de compression et de frittage. De plus, au-delà de 3 à 4% d'eau libre par rapport au poids de poudre traitée, l'eau libre entraîne une destruction des pastilles crues lors de leur démoulage.

Selon une variante, on peut réaliser l'oxydohydratation de la poudre en utilisant une solution de peroxyde d'hydrogène à l'état de vapeur, ce qui permet de réaliser le traitement plus rapidement. Dans ce cas, on dispose la poudre dans un récipient ouvert à son extrémité supérieure, le récipient étant disposé au-dessus d'une certaine masse de solution aqueuse de peroxyde d'hydrogène, par exemple d'une solution aqueuse renouvelée à 30% de peroxyde d'hydrogéne, qui est chauffé modérément pour former la qualité de vapeur de peroxyde d'hydrogène nécessaire au traitement de la poudres.

Selon l'invention, dans le cas où la poudre est du bioxyde d'uranium, on réalise de préférence le traitement d'oxydohydratation de façon à obtenir une couche d'oxyde hydraté $UO_3$, $2H_2O$ représentant de 3 à 35% en moles de la poudre de $UO_2$ traitée.

Selon l'invention, les poudres d'oxydes soumises au traitement d'oxydohydratation peuvent avoir des dimensions diverses et mêmes se présenter sous la forme de granulés qui peuvent atteindre une granulométrie voisine de 1 mm.

Le procédé de l'invention s'applique en particulier à la fabrication de pastilles de abioxyde d'uranium. Dans ce cas, après avoir soumis la poudre de bioxyde d'uranium au traitement d'oxydohydratation, selon l'invention, de façon à former sur sa surface une couche adhérente d'oxyde hydraté $[UO_2(OH)_2]$,$H_2O$, on me la poudre sous la forme de pastilles cylindriques par compression à froid après lui avoir ajouté de préférence un lubrifiant tel que le téarate de zinc et on fritte les pastilles crues ainsi obtenues à une température de 1400 à 1800°C sous atmosphère réductrice telle que l'hydrogène.

D'autres caractéristiques et avantages de l'invention apparaîtront mieux à la lecture des exemples suivants donnés bien entendu à titre illustratif et non limitatif.

Exemple 1:

On introduit dans un appareil rotatif un lot de 1 kg de poudre de $UO_2$ ayant une surface spécifique de 2 $m^2$/g.

On pulvérise ensuite sur la poudre 20 $cm^3$ d'une solution de peroxyde d'hydrogène à 30% en $H_2O_2$, ce qui représente 2% en poids de la masse de $UO_2$. L'opération de pulvérisation est réalisée en quelques minutes sur la surface du lit de poudre de façon à assurer une dispersion homogène des gouttelettes de réactif liquide, On soumet ensuite le lot de poudre ainsi traitée à un séchage pendant 1 h dans une étuve à 60°C afin d'assurer l'élimination de l'eau liquide excédentaire et la formation de la couche superficielle d'oxyde hydraté modifiant les propriétés de la poudre.

On comprime ensuite la poudre à froid sous une pression de 350 MPa pour former des pastilles cylindriques crues de 10 mm de diamètre et de 13 mm de hauteur.

On determine leur résistance à la traction qui atteint 0,86 MN/$cm^2$, ce que représente plus du double de la valeur obtenue sur des pastilles crues préparées dans des conditions indentiques à partir d'une poudre d'oxyde non traitée. Par ailleurs, on constate que les pastilles présentent moins de défauts et d'éclats sur leurs arêtes.

Après frittage pendant 4 h à 1700°C, sous atmosphère d'hydrogène, les pastilles frittées ont une masse volumique égale à 90% de la masse volumique théorique du bioxyde d'uranium, comme les pastilles frittées obtenues à partir de poudre non traitée: le procédé d'oxydohydratation superficielle conserve donc la qualité des pastilles

Exemple 2:

On ambiant des résultats similaires en soumettant à des opérations de compression et da frittage, réalisées dans les mêmes conditions, 1 kg de poudre de $UO_2$ exposée pendant 10 d dans une étuve, à une température d'environ 80°C, à une atmosphère d'air à 80% d'humidité.

Exemples 3 à 6:

Ces exemples se rapportent à la préparation des pastilles frittées de bioxyde d'uranium en utilisant comme poudre de départ de la poudre de bioxyde d'uranium soumise à un traitement d'oxydohydratation superficielle au moyen de solutions aqueuses ayant des concentrations différente en peroxyde d'hydrogène.

Dans chaque exemple, on utilise un lot de 1 kg de poudre de bioxyde d'uranium ayant une surface spécifique de 2 $m^2$/g. On introduit 1 kg de cette poudre dans un mélangeur rotatif pour assurer son brassage et on pulvérise au moyen d'un pistolet, sur la poudre brassée, 40 $cm^3$ (soit 4% en poids de la masse de $UO_2$) d'une solution de peroxyde d'hydrogène ayant des concentrations en peroxyde d'hydrogène qui varient selon les exemples. Aprés pulvérisation, ou soumet le lot de poudre traitée à un séchage dans une étuve portée à 60°C en diposant la poudre sous la forme d'un lit mince d'une épaisseur d'environ 1 cm. Après 2 h de séchage, on a obtenu la formation d'une couche superficielle de $UO_3$, $2H_2O$ et l'élimination de l'éxcédent d'eau.

On peut aussi réaliser le séchage dans un tube rotatif à une température sensiblement identique pendant 30 min. On mélange ensuite la poudre ainsi traitée avec un faible quantité, environ 0,2% en poids de lubrifiant solide finement pulvérisé constitué par du stéarate de zinc micronisé et on la transforme ensuite par compression à froid sous une presion de 350 MPa en pastilles cylindriques de 10 mm de diamètre et de 13 mm de hauteur. Une partie des pastilles crues ainsi obtenues est soumise à des essais destrictifs de

résistance à la traction par la méthode de l'essai brésilien, tandis que l'autre partie des pastilles est frittée à 1700°C, sous atmosphère d'hydrogène, pendant 4 h.

Après frittage, on mesure la densité et l'effet diabolo des pastilles obtenues, puis on les soumet au traitement de rectification et on examine après ce traitement les défauts de matière présents sur la partie cylindrique ou sur les arêtes, ce qui permet d'apprécier la qualité du produit fini.

On précise que l'essai brésilien consiste à réaliser un écrasement, suivant deux génératrices opposées, des pastilles cylindriques pour produire leur écalatement, ce que permet de déterminer leur résistance à la compression. En effectuant ensuite une conversion, on détermine leur résistance à la traction.

La mesure de l'effet diabolo a pour but de déterminer l'écart à la géométrie cylindrique des pastilles.

En effet, lors du frittage, les pastilles cylindriques crues se déforment, ce qui conduit à un rétrécissement de leur zone médiane qui présente alors un diamètre 2 inférieur au diamètre 1 des deux extrémités des pastilles. L'effet diabolo est déterminé par la différence Ø1—Ø2.

Les résultats obtenus en ce qui concerne la résistance à la traction et l'effet diabolo sont donnés dans la tableau 1 sur lequel on a indiqué également, à titre de référence, les résultats obtenus lorsqu'on réalise dans les mêmes conditions des pastilles frittées de biooxyde d'uranium à partir d'une poudre non soumise au traitement d'oxydohydratation par la solution de peroxyde d'hydrogène.

Aun vu de ce tableau, on constate que les valeurs de résistance à la traction des pastilles crues sont nettement améliorées par rapport à celles des pastilles obtenues à partir de la poudre non traitée.

De même, on remarque que l'effet diabolo est très inférieur pour les patilles obtenues à partir de poudre traitée selon l'invention.

La masse volumique apparente de toutes les pastilles frittées est élevée (98% de la valeur théorique), et la diamètre moyen des pastilles frittées est de 8,25 mm.

Après rectification, un examen comparable des manques de matière présents sur les pastilles frittées obtenues à partir de poudres soumises au traitement selon l'invention montre que le pourcentage d'étlats réhibitoire est nul. Les éclats de moindre importance (1 à 2 $mm^2$) affectent 5% des pastilles frittées obtenues, alors que dabs le cas de pastilles frittées obtenues à partir de poudres non soumises au traitement d'oxydation, les éclats de taille comprise entre 1 et 4$mm^2$ affectent 15% des pastilles.

Ainsi, on constate que la traitement de l'invention permet d'améliorer de façon notable la solidité des pastilles crues et la qualité finale des pastilles frittées et que de bons résultats sont déjà obtenus avec des solutions ayant une concentration en $H_2O_2$ aussi faible que que 8% en volume.

Exemple 7:

Des résultats indentiques sont obtenus en pulverisant les mêmes quantités des mêmes solutions de peroxyde d'hydrogène sur des granulés de d'$UO_2$.

Par exemple un lot de poudre est soumis à une compression sous 100 MPa qui donne des tablettes de masse volumique voisine de 50% de la valeur théorique. Ces tablettes sont détruites par concassage à sec en granulés de taille inférieure à 1 mm. Ces granulés subissent ensuite le traitement d'oxydohydratation défini dans les exemples précédents. Ils sont ensuite transformés en pastilles dans des conditions identiques.

Exemple 8:

Le traitement d'oxydohydratation décrit dans l'exemple 4 est appliqué à la même poudre d'$UO_2$.

Celle-ci est ensuite mélangée par brassage à de la poudre de thorium de surface spécifique: 7 $m^2$/g, en proportions pondérales variables; par exemple on réalise ainsi deux mélanges homogènes contenant respectivement 30 et 60% d'$UO_2$.

Les mélanges, ainsi que les constituants élémentaires $ThO_2$ er $UO_2$ traités, sont ensuite transformés en comprimés de façon indentique à ceux décrits dans l'exemple 4. La résistance à la traction mesurée sur ces catégories de comprimés crus prend les valeurs portées dans la tableau 2, qui donne aussi les valeurs obtenues dans des conditions analogues avec de la poudre d'$UO^2$ non traitée, brute.

De façon identique à l'exemple 4, les pastilles obtenues à partir des pastilles crues présentent de meilleures qualités lorsqu'on utilise l'$UO_2$ traité.

Exemple 9:

Un mélange homogène de poudre d'$UO_2$ déjà décrite ci-dessus dans l'exemple 1 et de 20% en poids de poudre de $PuO_2$ est transformé par compression sous 100 MPa et concassage à sec en granulés poreux de taille au plus égale à 1 mm. Ces granulés, placés dans un appariel qui les brasse, reçoivent ensuite une pulvérisation superficielle de 40 $cm^3$ de solution à 8% de peroxyde d'hydrogène. Cette solution s'absorbe dans la porosité du granulé. Après séchage naturel et addition de 1,5% en poids de stéarate de zinc finement micronisé, ces granulés traités sont transformés en comprimés cylindriques crus sous une pression de 400 MPa.

La résistance à la traction de ces comprimés atteint alors 1,5 $MN \cdot m^{-2}$, alors qu'elle serait de 0,6 $MN \cdot m^{-2}$ en l'absence du traitement d'oxydohydratation.

Après frittage les échantillons obtenus sont de meilleure qualité, ils sont moins déformés; leurs arêtes sont moins endommagées.

Exemple 10:

On prépare des comprimés d'$UO_2$—$PuO_2$

comme dans l'exemple 9 mais en utilisiant 30 $cm^3$ de solution à 12% de peroxyde d'hydrogène au lieu des 40 $cm^3$ de solution à 8% de peroxyde d'hydrogène.

Les résultats obtenues sont identiques à ceux de l'exemple 9.

Exemple 11:

Un mélange homogène de poudre d'$UO_2$ déjà décrite ci-dessus dans l'exemple 1 et de 8% en poids de poudre de $Gd_2O_3$ est transformé par compression sous 100 MPa er concassage à sec en granulés poreux de taille au plus égale à 1 mm. Ces granulés, placés dans un appareil qui les brasse, reçoivent ensuite une pulvérisation superficielle de 30 $cm^3$ de solution à 20% de peroxyde d'hydrogène. Cette solution s'absorbe dans la porosité du granulé. Après séchage naturel et addition de 1,5% en poids de stéarate de zinc finement micronisé, ces granulés traités sont transformés en comprimés cylindriques crus sous une pression de 400 MPa.

La résistance à la traction de ces comprimés atteint alors 0,9 $MN \cdot m^{-2}$, alors qu'elle serait de 0,33 $MN \cdot m^{-2}$ en l'absence du traitement d'oxydo-hydratation.

Après frittage les échantillons obtenus sont de meilleure qualité, ils sont moins déformés; leurs arêtes sont moins endommagées.

Exemple 12:

Un mélange homogène de poudre d'$UO^2$ appauvri contenant 5% en poids de $PuO_2$ et 8% en poids de poudre de $EU_2O_3$ est transforme par compression sous 100 MPa et concassage à sec en granulés, poreaux de taille au plus égalé à 1 mm. Ces granulés, placés dans un appareil qui les brasse, reçoivant ensuite une pulvérisation superficielle de 30 $cm^3$ de solution à 20% de peroxyde d'hydrogène. Cette solution s'absorbe dans la porosité du granulé. Après séchage naturel et addition de 1,5% en poids de stéarate de zinc finement micronisé, ces granulés sont transformés en comprimés cylindriques crus sous une pression de 400 MPa.

La résistance à la traction de ces comprimés atteint alors 0,75 $MN \cdot m^{-2}$, alors qu'elle serait de 0,43 $MN \cdot m^{-2}$ en l'absence du traitement d'oxydo-hydratation.

Après frittage les échantillons obtenus sont de meilleure qualité, ils sont moins déformés; leurs arêtes sont moins endommagées.

Exemple 13:

Des comprimés d'$UO_2$—$PuO_2$—$Gd_2O_3$ sont préparés comme dans l'exemple 12 en remplaçant la poudre d'$Eu_2O_3$ par de la poudre de $Gd_2O_3$.

Les résultats obtenus sont identiques à ceux de l'exemple 12.

*Tableau 1*

| Pulvérisation | | | Pastille crue | Pastille frittée |
|---|---|---|---|---|
| Exemples de référence | Quantité de solution ($cm^3$/kg de $UO_2$) | Concentration $H_2O_2$ (%) | Résistance à la traction ($MN\ m^{-2}$) | Effet diabolo (mm) |
| | 0 | 0 | 0,33 | 0,07 |
| 3 | 40 | 4 | 0,55 | 0,04 |
| 4 | 40 | 8 | 0,75 | 0,03 |
| 5 | 40 | 16 | 0,90 | 0,03 |
| 6 | 40 | 30 | 1,05 | 0,03 |

*Tableau 2*

*Résistance à la traction des comprimés crus ($MN \cdot m^{-2}$)*

| Nature de la poudre | $UO_2$ pur | $ThO_2$ + 60% $UO_2$ | $ThO_2$ + 30% $UO_2$ | $ThO_2$ pure |
|---|---|---|---|---|
| Brute, non traitée | 0,33 | 0,50 | 0,75 | 1 |
| Traitée | 0,75 | 0,85 | 0,95 | 1 |

**Revendications**

1. Procédé de frittage d'une poudre d'oxyde métallique, caractérisé en ce que ladite poudre est préalablement oxydé pour former sur la surface des particules de poudre une couche d'oxyde hydraté du même métal.

2. Procédé selon la revendication 1, caractérisé en ce que l'oxyde métallique est choisi dans le groupe comprenant le bioxyde d'uranium, le bioxyde de plutonium, et les oxydes mixtes $UO_2$—$PuO_2$, $UO_2$—$ThO_2$, $ThO_2$—$PuO_2$, $UO_2$—$Gd_2O_3$, $UO_2$—$PuO_2$—$Eu_2O_3$ et $UO_2$—$PuO_2$—$Gd_2O_3$.

3. Procédé selon l'une revendications 1 ou 2, caractérisé en ce que l'on réalise l'oxydation en traitant la poudre dans une atmosphère d'air humide pendant une durée suffisante pour former ladite couche d'oxyde hydraté.

4. Procédé selon la revendication 3, caractérisé en ce que l'on réalise cette oxydation à une température au plus égale à 90°C.

5. Procédé selon l'une revendications 1 ou 2, caractérisé en ce que l'on réalise l'oxydation en traitant la poudre par un agent oxydant, en présence d'eau ou de vapeur d'eau.

6. Procédé selon la revendication 5, caractérisé en ce que l'agent oxydant est le peroxyde d'hydrogène.

7. Procédé selon la revendication 6, caractérisé en ce que l'on mélange ladite poudre avec une solution aqueuse de peroxyde d'hydrogène et en ce que l'on soumet ensuite la poudre ainsi traitée à une sêchage pour éliminer l'excès d'eau.

8. Procédé selon la revendication 3, caractérisé en ce que la concentration en peroxyde d'hydrogène de la solution est de 4 à 30% en volume.

9. Procédé selon l'une revendications 7 ou 8, caractérisé en ce que la quantité de solution utilisée représente 2 à 15% du poids de la poudre d'oxyde métallique à traiter.

10. Procédé selon la revendication 5, caractérisé en ce que l'agent oxydant est l'ozone.

11. Procédé de fabrication de pastilles de bioxyde d'uranium, caractérisé en ce qu'il consister: 1. à soumettre une poudre de bioxyde d'uranium à un traitement selon l'une des revendications 1 à 10 de façon à former sur la surface de ladite poudre une couche adhérente d'oxyde hydraté: $[UO_2(OH)_2]$ $H_2O$; 2. à mettre la poudre ainsi traitée sous la forme de pastilles cylindriques par compression à froid, et 3. à fritter les pastilles crues ainsi obtenues à une température de 1400 à 1800°C sous atmosphère réductrice.

12. Procédé selon la revendication 11, caractérisé en ce que la couche d'oxyde hydraté represénte de 3 à 35% en moles de la poudre de $UO_2$ traitée.

**Patentansprüche**

1. Verfahren zum Sintern eines Metalloxidpulvers, dadurch gekennzeichnet, daß das Pulver vorher oxidiert wird, um auf der Oberfläche der Teilchen des Pulvers eine Schicht aus einem hydratisierten Oxid des gleichen Metalls zu bilden.

2. Verfahren nach Anspruch 1, dadurch gekennzeichnet, daß das Metalloxid aus der Gruppe Urandioxid; Plutoniumdioxid und die gemischten Oxide

$UO_2$—$PuO_2$, $UO_2$—$ThO_2$, $ThO_2$—$PuO_2$,
$UO_2$—$Gd_2O_3$, $UO_2$—$PuP_2$—$Eu_2O_3$ und
$UO_2$—$PuO_2$—$Gd_2O_3$ ausgewählt wird.

3. Verfahren nach einem der Ansprüche 1 und 2, dadurch gekennzeichnet, daß man die Oxidation durch Behandeln des Pulvers in einer Atmosphäre von feuchter Luft für einen Zeitraum, der ausreicht, um die hydratisierte Oxidschicht zu bilden, durchführt.

4. Verfahren nach Anspruch 3, dadurch gekennzeichnet, daß man die Oxidation bei einer Temperatur von höchstens 90°C durchführt.

5. Verfahren nach einem der Ansprüche 1 und 2, dadurch gekennzeichnet, daß man die Oxidation durch Behandeln des Pulvers mit einem Oxidationsmittel in Gegenwart von Wasser oder Wasserdampft, durchführt.

6. Verfahren nach Anspruch 5, dadurch gekennzeichnet, daß es sicht bei dem Oxidationsmittel um Wasserstoffperoxid handelt.

7. Verfahren nach Anspruch 6, dadurch gekennzeichnet, daß man das Pulver mit einer wässrigen Wasserstoffperoxidlösung mischt und daß man anschließend das so behandelte Pulver trocknet, um überschüssiges Wasser zu entfernen.

8. Verfahren nach Anspruch 7, dadurch gekennzeichnet, daß die Wasserstoffperoxidkonzentration der Lösung 4 is 30 Vol.% beträgt.

9. Verfahren nach einem der Ansprüche 7 und 8, dadurch gekennzeichnet, daß die verwendete Lösungsmenge 2 bis 15% des Gewichts des zu behandelnden Metalloxidpulvers darstellt.

10. Verfahren nach Anspruch 5, dadurch gekennzeichnet, daß es sich bei dem Oxidationsmittel um Ozon handelt.

11. Verfahren zur Herstellung von Urandioxid-Tabletten, dadurch gekennzwichnet, daß man

1) ein Urandioxidpulver nach einem der Ansprüche 1 bis 10 behandelt, um auf der Oberfläche dieses Pulvers eine haftende hydratisierte Oxidschicht aus $[UO_2(OH_{22})]$ $H_2O$ zu erzeugen;

2) das so behandelte Pulver in Form von zylindrischen Tabletten kalt preßt; und

3) die so erhaltenen rohen Tabletten bei einer Temperatur on 1400 bis 1800°C in einer reduzierenden Atmosphäre sintert.

12. Verfahren nach Anspruch 11, dadurch gekennzeichnet, daß die hydratisierte Oxidschicht 3—35 Mol% des behandelten Urandioxidpulvers darstellt.

**Claims**

1. Process for sintering a metal oxide powder, characterized in that said powder is first oxidized to form a layer of hydrated oxide of the same metal on the surface of the particles of powder.

2. Process according to claim 1, characterized in that the metal oxide is selected from the group comprising uranium dioxide, plutonium dioxide, and the mixed oxides $UO_2$—$PuO_2$, $UO_2$—$ThO_2$, $ThO_2$—$PuO_2$, $UO_2$—$Gd_2O_3$, $UO_2$—$PuP_2$—$Eu_2O_3$ and $UO_2$—$PuO_2$—$Gd_2O_3$.

3. Process according to either of claims 1 or 2, characterized in that the oxidation is carried out by treating the powder in an atmosphere of moist air for a time sufficient to form said layer of hydrated oxide.

4. Process according to claim 3, characterized in that said oxidation is carried out at a temperature of at least 90°C.

5. Process according to either of claims 1 or 2, characterized in that the oxidation is carried out by treating the powder with an oxidizing agent, in the presence of water or of water vapour.

6. Process according to claim 5, characterized in that the oxidizing agent is hydrogen peroxide.

7. Process according to claim 6, characterized in that said powder is mixed with an aqueous solution of hydrogen peroxide, and in that the thus-treated powder is subsequently dried to eliminate the excess water.

8. Process according to claim 7, characterized in that the concentration of hydrogen peroxide in the solution is from 4 to 30% by volume.

9. Process according to either of claims 7 or 8,

characterized in that the amount of solution employed is from 2 to 15% by weight of the metal oxide powder tol be treated.

10. Process according to claim 5, characterized in that the the oxidizing agent is ozone.

11. Process for the production of pellets of uranium dioxide, characterized in that it comprises: 1. subjecting a powder of uranium dioxide to a treatment according to any one of claims 1 to 10, whereby to form an adherent layer of hydrated oxide: $[UO_2(OH)_2]H_2O$; on the surface of said powder; 2. forming cylindrical pellets of the thereby-treated powder by cold compression, and 3. sintering the green pellets thereby obtained at a temperature of 1400 to 1800°C in a reducing atmosphere.

12. Process according to claim 11, characterized in that the layer of hydrated oxide represents 3 to 35 molar % of the treated $UO_2$ powder.